# EUROPÄISCHE PATENTSCHRIFT

(11) **EP 1 478 835 B1**
(45) Veröffentlichungstag und Bekanntmachung des Hinweises auf die Patenterteilung: **18.05.2011**
(21) Anmeldenummer: 03708018.1
(22) Anmeldetag: 07.02.2003
(51) Int. Cl.: F02F 7/00, F02F 11/00

(54) **STATISCHES ABDICHTELEMENT FÜR AKUSTISCH ENTKOPPELTE ANBAUTEILE**
STATIC SEALING ELEMENT FOR ACOUSTICALLY DECOUPLED ADD-ON PIECES
ELEMENT D'ETANCHEITE STATIQUE DESTINE A DES PIECES RAPPORTEES ACOUSTIQUEMENT DECOUPLEES

(30) Priorität: 26.02.2002 DE 10208233
(43) Veröffentlichungstag der Anmeldung: 24.11.2004
(73) Patentinhaber: Federal-Mogul Sealing Systems Bretten GmbH, 75015 Bretten (DE)
(72) Erfinder: SALAMEH, Ralf, 75053 Gondelsheim (DE)
(74) Vertreter: Kurig, Thomas
(86) Internationale Anmeldenummer: PCT/DE2003/000350
(87) Internationale Veröffentlichungsnummer: WO 2003/072920

(56) Entgegenhaltungen:
- EP-A- 0 602 398
- GB-A- 562 456
- US-A- 5 235 938

## Beschreibung

Die Erfindung beschreibt einen Gehäuseverschlußdeckel zur lösbaren, flüssigkeitsdichten Befestigung an einer Verbrennungskraftmaschine.

Die steigende Anzahl elektronischer Komponenten in und an Motoren bedingen eine immer größere Anzahl von Lösungen an flüssigkeitsdichten Durchführungen für Anbauteile, wie beispielsweise Sensoren, Stecker, Kabel, etc. Dies gilt insbesondere für Anbauteile, wie Drehzahl- und Positionsgeber im Bereich des Ventiltriebs, die Ihre Informationen aus dem Inneren des Motors an externe Auswerteinheiten weitergeben. Hierbei müssen die Anbauteile, z. B. Sensoren, durch die Gehäuseverschlußdeckel nach außen geführt werden. Um die Dichtheit dieser Durchführungen zu gewährleisten, sind eine Reihe von Gehäuseverschlußdeckeln bekannt.

Aus der EP 0 528 104 B1 ist ein Gehäuseverschlußdeckel mit einer sich im Einbauzustand durch den Deckel erstreckenden Welle bekannt, bestehend aus einem profilgezogenen Blechkörper mit im Wesentlichen topfförmigem Querschnitt, dessen Bodenfläche zwei zueinander radial versetzt angeordnete Radialflächen aufweist, wobei zur Verbindung mit dem abzudichtenden Gehäuse in der ersten Radialfläche Schraubendurchgangsbohrungen angeordnet sind und die stufenförmig dagegen versetzt angeordnete zweite Radialfläche zur Aufnahme eines statisch wirkenden Dichtstreifens dient, sowie einer dynamischen Lippendichtung für die Welle.

Dieser Gehäuseverschlußdeckel weist somit zwei unabhängig voneinander wirkende Dichtungen auf, die einerseits den Gehäuseverschlußdeckel statisch gegen den Motor und dynamisch gegen die Welle abdichten. Die starre Verbindung zwischen statischer und dynamischer Dichtung mittels des Blechkörpers, wirkt sich dabei negativ auf einen eventuellen Winkelversatz der Welle aus. Ein weiterer Nachteil ist, dass die dynamische Dichtung einer radialen Bewegung der Welle nur bedingt folgen kann.

Um einem Winkelversatz von Anbauteilen an Motoren folgen zu können, wird in der GB 562,456 ein Wellendichtring offenbart, bei dem eine flexible Verbindung zwischen statischer Anbindung an den Motor und dynamischer Wellendichtung gegeben ist. Die Wellendichtung besteht dabei aus einem elastomeren Ring mit einem metallischen Stützglied und einer konzentrisch gewellten scheibenförmigen Strecke, die im Bereich der Welle mit einem radial wirkenden Federring versehen ist.

Mit Hilfe derartiger Dichtungen ist es möglich, einen Winkelversatz von Anbauteilen auszugleichen, die Montage solcher Wellendichtringe gestaltet sich aber als sehr aufwendig, da diese meist eingepresst werden müssen.

Aufgabe der Erfindung ist es, einen akustisch entkoppelten, flüssigkeitsdichten Gehäuseverschlußdeckel zu entwickeln, der eine statische Abdichtung zur Montagefläche und zum Anbauteil gewährleistet und der in der Lage ist, einen Winkelversatz sowie eine radiale Verschiebung des Anbauteiles auszugleichen.

Diese Aufgabe wird erfindungsgemäß durch die Merkmale des Patentanspruchs 1 gelöst, vorteilhafte Weiterbildungen der Erfindung sind in den Unteransprüchen dokumentiert.

Der erfindungsgemäße Gedanke löst die gestellte Aufgabe dahingehend, dass der Gehäuseverschlußdeckel mit einem sich im Einbauzustand durch den Deckel erstreckenden, fest mit dem Gehäuse verbundenen Anbauteil, bestehend aus einem einlagigen metallischen oder polymeren Trägerelement mit einer Öffnung für das Anbauteil, wobei in der Öffnung eine Dichtung angeordnet ist, die eine axiale am Rand der Öffnung sich erstreckende und eine zur Abdichtung des Anbauteils radial sich erstreckende Dichtlippe aufweist, und dass die radial sich erstreckende Dichtlippe gegenüber dem Trägerelement winkel- und radialbeweglich in der Öffnung gehalten ist. Durch die verjüngte Ausbildung der Verbindungszone, wird die Anbindung des Anbauteils an das Trägerelement flexibel. Die Verjüngung findet erfindungsgemäß zwischen den axialen und de radialen Dichtlippen der Dichtung statt. Dabei muß die Verjüngung der Dichtung lediglich so weit ausgeformt sein, dass die Dichtung im Bereich der Verbindungszone leichter elastisch verformbar ist als im Bereich der axialen und radialen Dichtlippen. Der Gehäuseverschlußdeckel ist somit in der Lage Positionstoleranzen zwischen Anbauteil und Motor, aber auch zwischen der Verschraubung des Blechteils und der Motoröffnung auszugleichen.

Hieraus ergibt sich ein weiter Vorteil, durch die flexibel ausgeführte Verbindungszone ist der Gehäuseverschlußdeckel leichter zu montieren und zu demontieren. Insbesondere bei der Demontage können die starren Anbauteile nicht mehr beschädigt werden.

Die erfindungsgemäße Ausgestaltung des Gehäusedeckels bietet weiterhin den Vorteil, dass die Anbauteile in verstärktem Maße akustisch entkoppelt werden. So besitzen akustisch entkoppelte Systeme oftmals eine große Steifigkeit, die die Entkopplungswirkung negativ beeinflussen. Die Verjüngung der Verbindungszone bietet dabei den Vorteil, dass keine steife Anbindung zwischen axialer und radialer Abdichtung vorhanden ist, so dass Schwingungen nicht übertragen werden können.

Es kann weiterhin eine individuelle Abstimmung der Teilbereiche axiale Dichtlippe, Verbindungszone und radiale Dichtlippe stattfinden.

In einer weiteren erfindungsgemäßen Ausführung des Gehäuseverschlußdeckels wird vorgeschlagen, die Verbindungszone wellenförmig auszubilden, so dass sie die Form eines Faltenbalges oder mehrerer hintereinander angeordneter, tellerfederförmiger Scheiben aufweist. Hierbei ist es ebenfalls vorstellbar, die Verbindungszone aus einem anderen Werkstoff als dem Dichtungswerkstoff herzustellen, dies kann ein polymerer wie auch ein metallischer Werkstoff sein.

In einer weiteren Ausgestaltung der Erfindung ist es ebenfalls möglich, das Trägerelement im Bereich der Öffnung mit einer Schräge zu versehen. Die Schräge ist in ihrer Orientierung von der Montagefläche abgewandt angeordnet und dient einerseits zur Versteifung des Trägerelementes und andererseits einer leichteren Anbindung und Ausbildung der axialen Dichtlippe.

Damit größere Dichtkräfte über die gesamte Lebensdauer des Gehäuseverschlußdeckels ermöglicht werden können, wird erfindungsgemäß vorgeschlagen, auf der radial äußeren Umfangsoberfläche der radialen Dichtlippe der Dichtung einen Federring anzuordnen. Der Federring sollte dabei im Bereich der Erstreckung des Anbauteils angeordnet sein, so dass eine weitere radiale Kraft auf die radiale Dichtlippe und somit auf das Anbauteil wirkt.

Eine weitere Möglichkeit die Dichtkräfte zu beeinflussen, ist die Einbindung eines starren umlaufenden Ringes in die radiale Dichtlippe der Dichtung. Dieser Ring kann aus einem metallischen oder auch hochfesten Kunststoff gefertigt sein. Der Ring kann einerseits in die radiale Dichtlippe eingeformt sein oder auf der radial äußeren Oberfläche der radialen Dichtlippe aufliegen, wobei er formschlüssig gehalten wird.

Im weiteren werden erfindungsgemäße Ausführungsbeispiele eines Gehäuseverschlußdeckels mit axialen und radialen Dichtlippenbereichen und einem Verbindungselement anhand von Zeichnungen und im weiteren in der Beschreibung näher erläutert. Es zeigen:
- Figur 1: den Schnitt durch ein erfindungsgemäßes Ausführungsbeispiel eines Gehäuseverschlußdeckels mit einer axialen und radialen Dichtlippe und einer verjüngten Verbindungszone
- Figur 2: den Schnitt durch ein erfindungsgemäßes Ausführungsbeispiel eines Gehäuseverschlußdeckels mit einer axialen und radialen Dichtlippe und einer verjüngten Verbindungszone und einem Federring im radialen Dichtungsbereich
- Figur 3: den Schnitt durch ein erfindungsgemäßes Ausführungsbeispiel eines Gehäuseverschlußdeckels mit einer axialen und radialen Dichtlippe und einer verjüngten Verbindungszone und einem Versteifungsring im Bereich der radialen Dichtlippe
- Figur 4: den Schnitt durch ein erfindungsgemäßes Ausführungsbeispiel eines Gehäuseverschlußdeckels mit einem axialen und radialen Dichtungsbereich und einer verjüngten Verbindungszone und einem Versteifungsring an der radial äußeren Oberfläche der radialen Dichtlippe

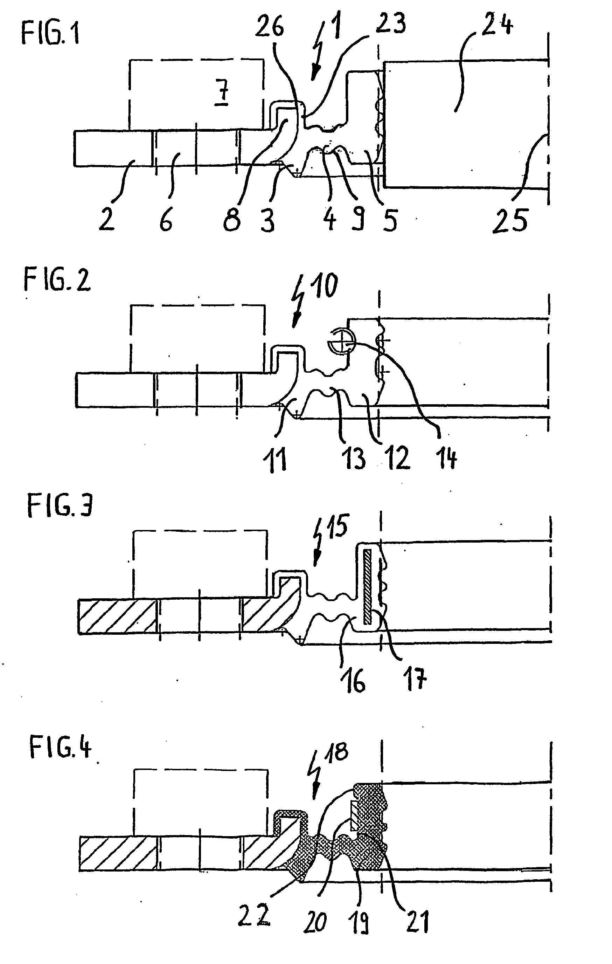

In Figur 1 ist der Schnitt durch einen erfindungsgemäßen Gehäuseverschlußdeckel 1 bestehend aus einem Trägerelement 2, einer Dichtung 23, einer axialen Dichtlippe 3, einer Verbindungszone 4, einem Anbauteil 24 und einer radialen Dichtlippe 5 dargestellt, wobei das Anbauteil 23 in der Öffnung 25 des Trägerelementes 2 gehalten ist. Dabei ist das Trägerelement 2 mit einer Durchgangsbohrung 6 für eine Befestigungsschraube 7 versehen und im Bereich der axialen Dichtlippe 3 abgewinkelt 8 ausgeführt, so dass sich ein Rand 26 ausbildet.

Die Verbindungszone 4 zwischen axialer 3 und radialer 4 Dichtlippe ist in diesem Beispiel wellenförmig 9 ausgeformt.

Die Figur 2 gibt den Schnitt durch einen Gehäuseverschlußdeckel 10 mit einer axialen 11 und radialen 12 Dichtlippe, einer verjüngten Verbindungszone 13 und einem Federring 14 im Bereich der radialen Dichtlippe 12 wieder.

Ein weiteres erfindungsgemäß ausgestaltetes Ausführungsbeispiel ist in Figur 3 wiedergegeben, der Gehäuseverschlußdeckel 15 ist im Bereich der radialen Dichtlippe 16 mit einem starren Ring 17 ausgestattet. Der Ring 17 wirkt einer Relaxation des elastomeren Dichtungswerkstoffes entgegen und wirkt gleichzeitig als Versteifungselement.

Figur 4 zeigt den Schnitt durch einen Gehäuseverschlußdeckel 18, der im Bereich der radialen Dichtlippe 19 mit einem starren Ring 20 versehen ist. Der Ring ist an der radial äußeren Oberfläche 21 der radialen Dichtlippe 19 angeordnet und wird formschlüssig 22 gehalten.

## Patentansprüche

1. Gehäuseverschlussdeckel (1, 10, 15, 18) zur lösbaren, flüssigkeitsdichten Befestigung an einer Verbrennungskraftmaschine mit einem sich im Einbauzustand durch den Deckel nach außen erstreckenden, fest mit dem Gehäuse verbundenen Anbauteil (24), bestehend aus einem einlagigen metallischen oder polymeren Trägerelement (2) mit einer Öffnung (25) für das Anbauteil (24), wobei in der Öffnung (25) eine Dichtung (23) angeordnet ist, die eine axiale (3, 11), am Rand (26) der Öffnung (25) sich erstreckende, und eine zur Abdichtung des Anbauteils (24) radial sich erstreckende Dichtlippe (5, 12, 16, 19) aufweist, und dass die radial sich erstreckende Dichtlippe (5, 12, 16, 19) gegenüber dem Trägerelement (2) winkel- und radialbeweglich in der Öffnung (25) gehalten ist;
wobei zwischen der radialen und axialen Dichtlippe (3, 11, 5, 12, 16, 19) eine Verbindungszone (4, 13) angeordnet ist, die eine derart ausgeformte Verjüngung aufweist, dass die Dichtung im Bereich der Verbindungszone (4, 13) leichter elastisch verformbar ist als im Bereich der axialen und radialen Dichtlippen, um eine verbesserte Winkel- und Radialbeweglichkeit zu erzeugen.

2. Gehäuseverschlussdeckel nach Anspruch 1, **dadurch gekennzeichnet, dass** die Verbindungszone (4, 13) wellenförmig ausgebildet ist und nach Art eines Faltenbalg fungiert.

3. Gehäuseverschlussdeckel nach Anspruch 1 und 2, **dadurch gekennzeichnet, dass** das Trägerelement (2) am Rand (26) axial abgewinkelt ist, wobei die Abwinkelung (8) entgegengesetzt zur axialen Dichtlippe (3, 11) gerichtet ist.

4. Gehäuseverschlussdeckel nach einem der Ansprüche 1 bis 3, **dadurch gekennzeichnet, dass** am Aussenumfang der radialen Dichtlippe (5, 12, 16, 19) ein umlaufender Federring (14) angeordnet ist.

5. Gehäuseverschlussdeckel nach einem der Ansprüche 1 bis 3, **dadurch gekennzeichnet, dass** am Aussenumfang der radialen Dichtlippe (5, 12, 16, 19) ein umlaufender starrer Ring (20) angeordnet ist.

6. Gehäuseverschlussdeckel nach einem der Ansprüche 1 bis 5, **dadurch gekennzeichnet, dass** in die radiale Dichtlippe (5, 12, 16, 19) ein umlaufender starrer Ring (17) eingeformt ist.

7. Gehäuseverschlussdeckel nach einem der Ansprüche 1 bis 6, **dadurch gekennzeichnet, dass** die Verbindungszone (4, 13) aus einem anderen Werkstoff besteht als die Dichtlippen (3, 5, 11, 1, 2, 16, 19).

## Claims

1. Housing closing cover (1, 10, 15, 18) for detachable, fluid-tight fastening to an internal combustion engine, with an add-on part (24) extending outwards through the cover in the installed state and securely connected with the housing, consisting of a single-layered metallic or polymer carrier element (2) with an opening (25) for the add-on part (24), wherein in the opening (25) a seal (23) is arranged, which has an axial (3, 11) sealing lip, extending on the edge (26) of the opening (25), and a sealing lip (5, 12, 16, 19) extending radially for sealing the add-on part (24), and that the radially extending sealing lip (5, 12, 16, 19) is held so as to be movable angularly and radially in the opening (25) with respect to the carrier element (2);
wherein between the radial and axial sealing lip (3, 11, 5, 12, 16, 19) a connecting zone (4, 13) is arranged, which has a taper formed such that the seal is more readily deformable elastically in the region of the connecting zone (4, 13) than in the region of the axial and radial sealing lips, in order to produce an improved angular and radial mobility.

2. Housing closing cover according to Claim 1, **characterized in that** the connecting zone (4, 13) is constructed so as to be wave-shaped and functions in the manner of a bellows.

3. Housing closing cover according to Claim 1 and 2, **characterized in that** the carrier element (2) is angled axially at the edge (26), wherein the angle (8) is directed in opposition to the axial sealing lip (3, 11).

4. Housing closing cover according to one of Claims 1 to 3, **characterized in that** a circumferential spring ring (14) is arranged on the outer periphery of the radial sealing lip (5, 12, 16, 19).

5. Housing closing cover according to one of Claims 1 to 3, **characterized in that** a circumferential rigid ring (20) is arranged on the outer periphery of the radial sealing lip (5, 12, 16, 19).

6. Housing closing cover according to one of Claims 1 to 5, **characterized in that** a circumferential rigid ring (17) is moulded into the radial sealing lip (5, 12, 16, 19).

7. Housing closing cover according to one of Claims 1 to 6, **characterized in that** the connecting zone (4, 13) consists of a material which is different from the sealing lips (3, 5, 11, 12, 16, 19).

## Revendications

1. Couvercle de fermeture de boîtier (1, 10, 15, 18) pour la fixation amovible et étanche au liquide sur une machine à combustion interne avec une partie rapportée (24) s'étendant dans l'état de montage à travers le couvercle vers l'extérieur et reliée fixement au boîtier, comprenant un élément support (2) monocouche, métallique ou polymère, avec une ouverture (25) pour la partie rapportée (24), un joint (23) étant disposé dans l'ouverture (25), qui présente une lèvre d'étanchéité axiale (3, 11), s'étendant sur le bord (26) de l'ouverture (25), et une lèvre d'étanchéité (5, 12, 16, 19) s'étendant radialement par rapport à l'étanchéité de la partie rapportée (24), et la lèvre d'étanchéité (5, 12, 16, 19) s'étendant radialement étant maintenue dans l'ouverture (25) de façon mobile en angle et radialement par rapport à l'élément support (2) ;
une zone de liaison (4, 13) étant disposée entre la lèvre d'étanchéité radiale et la lèvre d'étanchéité axiale (3, 11, 5, 12, 16, 19), laquelle zone présente un rétrécissement formé de telle sorte que le joint peut être déformé élastiquement plus facilement dans le secteur de la zone de liaison (4, 13) que dans le secteur des lèvres d'étanchéité axiales et radiales, afin de générer une mobilité en angle et une mobilité radiale optimisées.

2. Couvercle de fermeture de boîtier selon la revendication 1, **caractérisé en ce que** la zone de liaison (4, 13) est conçue avec une forme ondulée et fonctionne à la façon d'un soufflet.

3. Couvercle de fermeture de boîtier selon les revendications 1 et 2, **caractérisé en ce que** l'élément support (2) est coudé axialement sur le bord (26), le coudage (8) étant orienté dans le sens opposé à la lèvre d'étanchéité axiale (3, 11).

4. Couvercle de fermeture de boîtier selon l'une quelconque des revendications 1 à 3, **caractérisé en ce qu'**une bague à ressort périphérique (14) est disposée sur le pourtour extérieur de la lèvre d'étanchéité radiale (5, 12, 16, 19).

5. Couvercle de fermeture de boîtier selon l'une quelconque des revendications 1 à 3, **caractérisé en ce qu'**une bague (20) rigide périphérique est disposée sur le pourtour extérieur de la lèvre d'étanchéité (5, 12, 16, 19) radiale.

6. Couvercle de fermeture de boîtier selon l'une quelconque des revendications 1 à 5, **caractérisé en ce qu'**une bague (17) rigide périphérique est formée dans la lèvre d'étanchéité (5, 12, 16, 19) radiale.

7. Couvercle de fermeture de boîtier selon l'une quelconque des revendications 1 à 6, **caractérisé en ce que** la zone de liaison (4, 13) est à base d'un matériau autre que les lèvres d'étanchéité (3, 5, 11, 12, 16, 19).
